# EUROPEAN PATENT SPECIFICATION

(11) **EP 2 317 202 B1**
(45) Date of publication and mention of the grant of the patent: **23.03.2016**
(21) Application number: 09013706.8
(22) Date of filing: 30.10.2009
(51) Int. Cl.: F16L 55/24, F16L 19/02, A47L 15/42, D06F 39/08

(54) **Connector with an integral filter and pipe fitting**
Kupplung mit integriertem Filter und Rohrarmatur
Connecteur avec un filtre intégral et raccord de tuyauterie

(43) Date of publication of application: 04.05.2011
(73) Proprietor: RE-FLEX S.r.l., 21049 Tradate (VA) (IT)
(72) Inventor: Macchi, Claudio, 21040 Venegono Inferiore (VA) (IT)
(74) Representative: Grünecker Patent- und Rechtsanwälte PartG mbB

(56) References cited:
- EP-A- 0 473 558
- DE-A1- 1 585 565
- US-A- 2 843 054
- US-A- 3 421 631

## Description

The invention concerns a connector connectable to a pipe and a nut, which is configured to be positioned between a washing machine or a dishwasher and a tap or a faucet of a water supply. The invention also concerns a pipe fitting with such a connector, which is attachable to the tap or the faucet of the water supply.

Such connectors and pipe fittings are part of the prior art. However, such prior art pipe fittings comprise at least five different entities, namely a pipe, a nut, a connector, a filter and an additional gasket. The connector is inserted in the pipe through the nut, so that fluid can be routed from a tap to a washing machine or a dishwasher.

Normally, the fluid, such as water is routed to the washing machine or the dishwasher. To avoid impurities entering the washing machine or the dishwasher, normally the filter has to be included in the pipe fitting. As the pipe, the nut, the connector and the filter are separate elements, especially the filter, has to be inserted in the connector. The nut, comprising an inner thread, is screwed on an outer thread of the tap or the faucet of the water supply. To avoid the fluid, namely water, passing between the nut and the connector in the prior art a separate gasket is used. This gasket is inserted in the nut and is positioned between the connector and the tap or the faucet of the water supply.

The prior art has the drawback that this pipe fitting is difficult to be assembled and expensive in its production. It is therefore the object of the invention to simplify on the one hand the manufacturing process and, on the other hand, to minimize the costs during production.

Related prior art is disclosed in US 3,421,631, EP 0 473 558 A1 and US 2,843,054 A. A connector according to the preamble of independent claim 1 is known from DE 1585565 A1.

The object is solved by the features of independent claim 1.

Due to the invention, lesser components have to be produced and later used during the assembly process. The production is thereby made leaner and more cost efficient. The assembly operation is also simplified which additionally reduces costs and also minimizes the probability of an incorrect installation. The overall quality is thereby upgraded.

Special embodiments are claimed in the dependent claims and are detailed in the following:
It is of advantage to configure the connector such that the filter is monolithically connected to the connector. The assembly process can thereby comprise a higher degree of freedom. The connector and the filter can for instance, be manufactured independently and in a final step monolithically connected to each other so that the filter as well as the connector are producible by separate means. This further upgrades the quality of the combined connector-filter device.

To minimize the costs and make use of conventional production machines possible, it is of an advantage, if the connector is a bi-injection moulding device.

To make leakage impossible, it is of advantage if the connector comprises a surface, at least on the distal side of the pipe, with sealing properties to prevent fluid passing between the nut and the connector.

Experiments have shown that it is of an advantage if the filter is having a conical outer form. However, straight cylindrical outer forms have also proved to have advantageous properties.

The adjustment of the pipe fitting is nearly optimal if the filter is arranged such that the symmetrical axis of the filter is coaxially positioned to the symmetrical axis of the pipe and/or the connector.

The leak-tightness is enhanced if the gasket comprises overmoulded thermoplastic rubber material. Other suitable synthetic material can be used for either the filter portion or the gasket portion.

To have good filtering properties, it is of advantage if the filter comprises of at least one perforated surface, preferably the conical outer space of the filter and/or the distal surface in regards to the pipe.

The invention also concerns a pipe fitting, with a nut, attachable to a dishwasher or a washing machine, with a pipe for routing a fluid, such as water, to the nut or from the nut away, with such a connector.

By preventing a separate gasket, the costs of production and assembly can be minimized. Further, the probability of leakage is minimized, as no jamming of the separate gasket can happen.

If the connector is having a first end, which is connected to the pipe with a form fit, a durable connector between a pipe and the connector can be achieved. The connection between the pipe and the connector should be of such tightness that no fluid, such as water, can pass between the outer surface of the connector and the inner surface of the pipe in between. Leakage on the pipe side of the connector is then avoided.

It is further of an advantage if the first end is arranged internally of the pipe. During the assembly, the connector only has to be pushed into the pipe so that form fitting elements of the connector grab into the pipe, which is preferably of plastic material, so that a connection is achieved, which is only separable again after an extensive effort.

If the length of the filter in the direction of the symmetrical axis of the filter is such, that a distal surface of the filter is arranged in the interior of the nut, damage of the filter during the assembly process can be avoided.

If the filter comprises at least one perforated surface, preferably a conical outer surface of the filter and/or the distal surface in the regards to the pipe, a good filter effect can be achieved.

In the following the invention is specified by help of a drawing.
In Figure 1, the pipe fitting according to the invention in assembled form in cross section is disclosed.
Figure 2 discloses a nut to be used in the pipe fitting according to the invention, whereby the nut is shown in cross-section and
Figure 3 discloses the connector with integrated filter according to the invention.

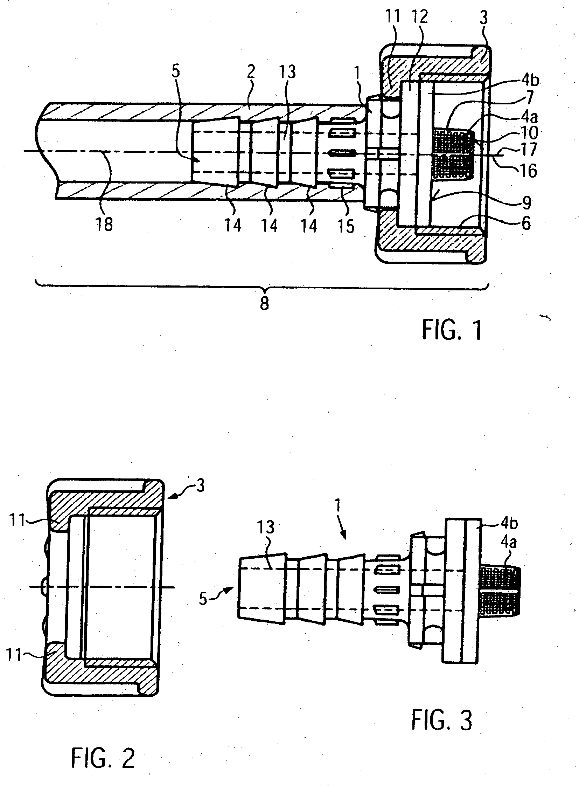

In Figure 1 the connector 1 inside of a pipe 2 and inside of a nut 3 is disclosed. The connector 1 comprises a portion, which is configured as a filter 4a. The filter 4a is an integral element of the connector 1, as well as a gasket 4b.

The connector 1 is produced in a bi-injection moulding machine. The material of the gasket 4b is different to the rest of the material of the connector 1, especially the filter 4a. The gasket 4b is obtained by overmoulding thermoplastic rubber on the connector, using the same mould.

During the production of the connector 1 the filter 4a has been monolithically connected to the connector 1. The connector 1 is configured in the shown embodiment as a straight connector, such that a channel 5 is included, so that a fluid such as water can be routed through the connector 1, to the pipe 2, namely through the interior of the nut 3, to the filter 4a and then through the channel 5 to a washing machine or a dishwasher.

The connection between the nut 3 and the tap or the faucet of the water supply (not shown) is realized by an internal thread 6 on the interior of the nut 3, being screwed on an exterior thread of the tap or the faucet.

The filter 4a has either a straight cylindrical outer surface or a conical outer surface 7. This straight cylindrical or conical outer surface 7 is perforated to achieve a filtering effect on the fluid such as water, entering the washing machine or the dishwasher.

The pipe fitting 8 is used, to route water to the washing machine or the dishwasher. The pipe fitting comprises the connector 1 with the filter 4a, the pipe 2 and the nut 3.

The nut 3 can be screwed to the tap or the faucet of the water supply, without the additional use. of a separate gasket, as a distal surface 9 of the connector 1 in regards to the pipe 2 is configured to comprise sealing properties. Such, the distal surface 9 can be used as the gasket 4b.

The filter 4a comprises also a distal surface, which is referenced with the reference number 10. This distal surface 10 of the filter 4a also comprises a perforation to have a filtering effect on the water passing through the filter 4a. Further, the distal surface 10 of the filter 4a is positioned in the interior of the nut 3, resting inside the nut 3, when the pipe fitting 8 is assembled. During assembly, a projection 11 engages a nose 12. This nose 12 can also be configured as a step.

The connector 1 is positioned with a first end 13 inside of the pipe 2. As the first end 13 comprises protrusions 14 and is configured of synthetic material, the protrusions 14 are compressible and also compress the plastic material of the pipe 2, so that a form fit and force fit between the connector 1 and the pipe 2 is achieved. Between the protrusions 14 and the nose 12 numeral ribs 15 are arranged. These ribs 15 have a longitudinal direction parallel to a symmetrical axis 16 of the connector 1. The ribs 15 prevent a rotational movement between the connector 1 and the pipe 2.

The symmetrical axis 16 of the connector 1 is coaxial to the symmetrical axis 17 of the filter 4a and a symmetrical axis 18 of the pipe 2.

The connector 1, the pipe 2 and the nut 3 and the filter 4a are all concentrically configured and arranged to each other.

In Figures 2 and 3, the nut 3 and the connector 1 are shown respectively. In those figures for the same element the same reference numbers are used. The channel 5 of the connector 1 extending from the first end 13 through the connector 1 into the filter 4a is shown with broken lines in Figure 3.

## Claims

1. Connector (1) with protrusions (14) on one side, connectable to a pipe (2) and a nut (3), which is configured to be positioned between a washing machine or a dishwasher and a tap or a faucet of a water supply of the washing machine/dishwasher, wherein the protrusions (14) are positionable in the pipe (2) wherein the connector (1) comprises a filter (4a) and a gasket (4b) as an integral element of the connector (1), **characterized in that** the gasket (4b) consists of synthetic material different to the material of the filter (4a) and is overmoulded onto the connector (1).

2. Connector (1) according to claim 1 **characterized in that** the connector (1) is produced in a bi-injection moulding machine.

3. Connector (1) according to one of the claims 1-2 **characterized in that** the connector (1) comprises a surface (9) with sealing properties at least on the side, which is connectable to the tap or the faucet to prevent fluid passing between the nut (3) and the connector (1).

4. Connector (1) according to one of the claims 1-3 **characterized in** the filter (4a) having a conical outer surface (7).

5. Connector (1) according to one of the claims 1-4 **characterized in** the filter (4a) arranged such that the symmetrical axis (17) of the filter (4a) is coaxially positioned to the symmetrical axis (16 and/or 18) of the connector (1) and/or the pipe (2).

6. Connector (1) according to one of the foregoing claims, **characterized in that** the gasket (4b) comprises overmoulded thermoplastic rubber material.

7. Pipe fitting (8) with a nut (3) attachable to a washing machine or a dishwasher with a pipe (2) for routing a fluid, such as water, to the nut (3) or from the nut (3) away, **characterized in** comprising a connector (1) according to one of the foregoing claims.

8. Pipe fitting (8) according to claim 7 **characterized in** the connector (1) having a first end (13) which is connected to the pipe (2) with a form fit.

9. Pipe fitting (8) according to claim 8 **characterized in** the first end (13) being arranged internally of the pipe (2).

10. Pipe fitting (8) according to one of the claims 7-9 **characterized in that** the length of the filter (4a) in direction of the symmetrical axis (17) of the filter (4a) is such, that a distal surface (10) of the filter (4a) is arranged in the interior of the nut (3).

11. Pipe fitting (8) according to claim 10 **characterized in that** the filter (4a) comprises at least one perforated surface, preferably the conical outer surface (7) of the filter (4a) and/or the distal surface (10) in regards to the pipe (2).

## Patentansprüche

1. Verbinder (1) mit Vorsprüngen (14) an einer Seite, der mit einem Rohr (2) und einer Mutter (3) verbunden werden kann und so eingerichtet ist, dass er zwischen einer Waschmaschine oder einem Geschirrspüler und einer Wasserleitung oder einem Wasserhahn einer Wasserversorgung der Waschmaschine/des Geschirrspülers positioniert wird, wobei die Vorsprünge (14) in dem Rohr (2) positioniert werden können und der Verbinder (1) einen Filter (4a) sowie eine Dichtung (4b) als ein integrales Element des Verbinders (1) umfasst, **dadurch gekennzeichnet, dass** die Dichtung (4b) aus Kunststoffmaterial besteht, das sich von dem Material des Filters (4a) unterscheidet und auf den Verbinder (1) aufgeformt ist.

2. Verbinder (1) nach Anspruch 1, **dadurch gekennzeichnet, dass** der Verbinder (1) in einer Bi-Injektions-Formmaschine hergestellt wird.

3. Verbinder (1) nach einem der Ansprüche 1-2, **dadurch gekennzeichnet, dass** der Verbinder (1) eine Fläche (9) mit Dichtungseigenschaften wenigstens an der Seite umfasst, die mit der Wasserleitung oder dem Wasserhahn verbunden werden kann, um zu verhindern, dass Flüssigkeit zwischen der Mutter (3) und dem Verbinder (1) hindurchtritt.

4. Verbinder (1) nach einem der Ansprüche 1-3, **dadurch gekennzeichnet, dass** der Filter (4a) eine konische Außenfläche (7) hat.

5. Verbinder (1) nach einem der Ansprüche 1-4, **dadurch gekennzeichnet, dass** der Filter (4a) so angeordnet ist, dass die Symmetrieachse (17) des Filters (4a) koaxial zu der Symmetrieachse (16 und/oder 18) des Verbinders (1) und/oder des Rohrs (2) angeordnet ist.

6. Verbinder (1) nach einem der vorangehenden Ansprüche, **dadurch gekennzeichnet, dass** die Dichtung (4b) aufgeformtes thermoplastisches Elastomermaterial umfasst.

7. Rohranschlussstück (8) mit einer Mutter (3), das an einer Waschmaschine oder einem Geschirrspüler mit einem Rohr (2) angebracht werden kann, mit dem eine Flüssigkeit, wie beispielsweise Wasser, zu der Mutter (3) hin oder von der Mutter (3) weg geleitet wird, **dadurch gekennzeichnet, dass** es einen Verbinder (1) nach einem der vorangehenden Ansprüche umfasst.

8. Rohranschlussstück (8) nach Anspruch 7, **dadurch gekennzeichnet, dass** der Verbinder (1) ein erstes Ende (13) hat, das mit dem Rohr (2) mit einem Formschluss verbunden ist.

9. Rohranschlussstück (8) nach Anspruch 8, **dadurch gekennzeichnet, dass** das erste Ende (13) im Inneren des Rohrs (2) angeordnet ist.

10. Rohranschlussstück (8) nach einem der Ansprüche 7-9, **dadurch gekennzeichnet, dass** die Länge des Filters (4a) in Richtung der Symmetrieachse (17) des Filters (4a) so ist, dass eine vordere Fläche (10) des Filters (4a) im Inneren der Mutter (3) angeordnet ist.

11. Rohranschlussstück (8) nach Anspruch 10, **dadurch gekennzeichnet, dass** der Filter (4a) wenigstens eine perforierte Fläche, vorzugsweise die konische Außenfläche (7) des Filters (4a) und/oder die vordere Fläche (10) in Bezug auf das Rohr (2), umfasst.

## Revendications

1. Connecteur (1) avec des protubérances (14) sur un côté, pouvant être raccordé à un tuyau (2) et un écrou (3), qui est configuré pour être positionné entre un lave-linge ou un lave-vaisselle et une prise ou un robinet d'une alimentation en eau du lave-linge/lave-vaisselle, dans lequel les protubérances (14) peuvent être positionnées dans le tuyau (2) dans lequel le connecteur (1) comprend un filtre (4a) et un joint (4b) en tant qu'élément intégré du connecteur (1), **caractérisé en ce que** le joint (4b) est constitué d'une matière synthétique différente de la matière du filtre (4a) et est surmoulé sur le connecteur (1).

2. Connecteur (1) selon la revendication 1, **caractérisé en ce que** le connecteur (1) est fabriqué dans une machine de moulage par bi-injection.

3. Connecteur (1) selon l'une des revendications 1 à 2, **caractérisé en ce que** le connecteur (1) comprend une surface (9) avec des propriétés d'étanchéité au moins sur le côté, pouvant être raccordée à la prise ou au robinet pour empêcher le passage de fluide entre l'écrou (3) et le connecteur (1).

4. Connecteur (1) selon l'une des revendications 1 à 3, **caractérisé en ce que** le filtre (4a) comporte une surface extérieure conique (7).

5. Connecteur (1) selon l'une des revendications 1 à 4, **caractérisé en ce que** le filtre (4a) est agencé de sorte que l'axe de symétrie (17) du filtre (4a) est positionné de manière coaxiale à l'axe de symétrie (16 et/ou 18) du connecteur (1) et/ou du tuyau (2).

6. Connecteur (1) selon l'une des revendications précédentes, **caractérisé en ce que** le joint (4b) comprend un matériau en caoutchouc thermoplastique surmoulé.

7. Raccord de tuyauterie (8) avec un écrou (3) pouvant être fixé à un lave-linge ou un lave-vaisselle avec un tuyau (2) pour acheminer un fluide, tel que de l'eau, à l'écrou (3) ou l'éloigner de l'écrou (3), **caractérisé en ce qu'**il comprend un connecteur (1) selon l'une des revendications précédentes.

8. Raccord de tuyauterie (8) selon la revendication 7, **caractérisé en ce que** le connecteur (1) possède une première extrémité (13) qui est raccordée au tuyau (2) avec une complémentarité de forme.

9. Raccord de tuyauterie (8) selon la revendication 8, **caractérisé en ce que** la première extrémité (13) est agencée de manière interne au tuyau (2).

10. Raccord de tuyauterie (8) selon l'une des revendications 7 à 9, **caractérisé en ce que** la longueur du filtre (4a) dans la direction de l'axe de symétrie (17) du filtre (4a) est telle que la surface distale (10) du filtre (4a) est agencée à l'intérieur de l'écrou (3).

11. Raccord de tuyauterie (8) selon la revendication 10, **caractérisé en ce que** le filtre (4a) comprend au moins une surface perforée, de préférence la surface externe conique (7) du filtre (4a) et/ou la surface distale (10) concernant le tuyau (2).
